# EUROPÄISCHE PATENTSCHRIFT

(11) **EP 3 152 000 B1**
(45) Veröffentlichungstag und Bekanntmachung des Hinweises auf die Patenterteilung: **10.11.2021**
(21) Anmeldenummer: 14755037.0
(22) Anmeldetag: 06.08.2014
(51) Int. Cl.: B24B 5/42, B24B 19/12, B24B 21/00, B24B 27/00, B24B 49/06, B23Q 39/02

(54) **FINISHVORRICHTUNG ZUR FINISHBEARBEITUNG EINES WERKSTÜCKS, INSBESONDERE EINER KURBELWELLE ODER EINER NOCKENWELLE**
FINISHING DEVICE FOR FINISH MACHINING OF A WORKPIECE, IN PARTICULAR OF A CRANKSHAFT OR A CAMSHAFT
DISPOSITIF DE FINITION SERVANT À LA FINITION D'UNE PIÈCE À USINER, EN PARTICULIER D'UN VILEBREQUIN OU D'UN ARBRE À CAMES

(43) Veröffentlichungstag der Anmeldung: 12.04.2017
(73) Patentinhaber: Supfina Grieshaber GmbH & Co. KG, 77709 Wolfach (DE)
(72) Erfinder: HILDEBRANDT, Oliver, 78132 Hornberg (DE)
(74) Vertreter: DREISS Patentanwälte PartG mbB
(86) Internationale Anmeldenummer: PCT/EP2014/066945
(87) Internationale Veröffentlichungsnummer: WO 2016/019997

(56) Entgegenhaltungen:
- DE-A1-102007 026 562
- GB-A- 2 177 329
- JP-A- 2000 263 398
- US-A1- 2010 054 887

## Beschreibung

Die Erfindung betrifft eine Finishvorrichtung zur Finishbearbeitung eines Werkstücks, insbesondere einer Kurbelwelle oder einer Nockenwelle, mit einem Werkstückhalter und mit einem Rotationsantrieb zur Rotation des Werkstücks um dessen Werkstückachse, mit mindestens einem ersten Finishwerkzeug zur Bearbeitung eines zu der Werkstückachse konzentrischen Hauptlagers und mit mindestens einem zweiten Finishwerkzeug zur Bearbeitung eines Zusatzlagers.

Eine solche Finishvorrichtung ist aus der DE 10 2007 059 926 A1 bekannt. Diese Finishvorrichtungen dienen dazu, Lagerflächen mit einer für ein Finishverfahren charakteristischen Kreuzschliffstruktur zu versehen. Zu diesem Zweck wird ein Finishwerkzeug, beispielsweise ein Finishband oder ein Finishstein, gegen eine finishend zu bearbeitende Werkstückfläche angedrückt. Dabei wird einer Rotationsbewegung des Werkstücks eine Oszillationsbewegung überlagert, welche parallel zu der Rotationsachse des Werkstücks ausgerichtet ist.

Die Finishbearbeitung eines Werkstücks erzeugt ein Werkstück mit kleinsten Oberflächentoleranzen. Voraussetzung hierfür ist, dass die Finishwerkzeuge exakt relativ zu dem zu bearbeitenden Werkstück ausgerichtet werden. Bei Kurbelwellen oder Nockenwellen mit mehreren Lagern kommt hinzu, dass in Achsrichtung des Werkstücks gesehen zueinander parallel angeordnete Finishwerkzeuge in ihrem Abstand relativ zueinander exakt eingestellt werden müssen, damit die Finishbearbeitung zueinander benachbarter Lagerflächen exakt dem Stichmaß der Kurbelwelle oder Nockenwelle entsprechend durchgeführt werden kann.

Die vorstehend beschriebenen Anforderungen erfordern eine exakte Ausrichtung des Werkstücks in dem Werkstückhalter und eine exakte Ausrichtung der Finishwerkzeuge relativ zu dem Werkstück.

Darüber hinaus unterliegen die Finishwerkzeuge einem Verschleiß, sodass diese in regelmäßigen Abständen ausgetauscht werden müssen.

Die vorstehend beschriebenen Vorgänge erfordern eine möglichst gute Zugänglichkeit zu den Finishwerkzeugen, welche bei den bekannten Finishvorrichtungen jedoch nicht immer gegeben ist. Beispielsweise behindern Werkstücktransportsysteme und/oder Spritzschutzeinrichtungen einen freien Zugang zu den Finishwerkzeugen. Dies hat zur Folge, dass Wartungs- und/oder Einstellarbeiten erschwert sein können. Eine Finishvorrichtung mit den Merkmalen des Oberbegriffs des Patentanspruchs 1 ist aus der JP 2000 263398 A bekannt.

Hiervon ausgehend liegt der vorliegenden Erfindung die Aufgabe zugrunde, eine Finishvorrichtung anzugeben, mit welcher die vorstehend beschriebenen Nachteile vermieden werden.

Diese Aufgabe wird bei einer Finishvorrichtung mit den Merkmalen des Patentanspruchs 1 erfindungsgemäß durch die kennzeichnenden Merkmale des Patentanspruchs 1 gelöst.

Erfindungsgemäß ist vorgesehen, dass die Zugänglichkeit der Finishwerkzeuge dadurch vereinfacht wird, dass diese außerhalb eines Arbeitsbereichs in einem Zusatzbereich positionierbar sind, sodass die dort positionierten Finishwerkzeuge besonders gut zugänglich sind. Dies vereinfacht die Durchführung von Wartungsarbeiten an den Finishwerkzeugen.

Erfindungsgemäß ist in dem Zusatzbereich ein zusätzlicher Werkstückhalter angeordnet. Dies ermöglicht es, in dem Zusatzbereich die in dem Arbeitsbereich für ein bestimmtes Werkstück vorhandene Arbeitssituation nachzubilden, sodass Einrichtvorgänge in dem Zusatzbereich durchgeführt werden können. Beispielsweise können die Finishwerkzeuge hinsichtlich ihres Abstands relativ zueinander und/oder hinsichtlich ihrer Lage relativ zu einem zu bearbeitenden Werkstück in dem Zusatzbereich eingestellt werden und anschließend in den Arbeitsbereich gebracht werden. Die in dem gut zugänglichen Zusatzbereich durchgeführten Einstellarbeiten müssen dann in dem schlecht zugänglichen Arbeitsbereich nicht mehr durchgeführt werden.

Besonders vorteilhaft ist es, wenn der zusätzliche Werkstückhalter hinsichtlich seiner mit einem Werkstück zusammenwirkenden Werkstückhalteflächen (insbesondere kegelförmige Spitzen) baugleich zu dem Werkstückhalter des Arbeitsbereiches ist.

Besonders bevorzugt ist es, dass der zusätzliche Werkstückhalter einen Spindelstock und einen Reitstock umfasst, sodass ein Werkstück oder eine Einrichtwelle in dem Zusatzbereich anordenbar und dort zwischen dem Spindelstock und dem Reitstock des zusätzlichen Werkstückhalters aufnehmbar ist.

Insbesondere ist es bevorzugt, dass ein Spindelstock und ein Reitstock des Werkzeughalters des Arbeitsbereichs relativ zueinander ausgerichtet sind und dass der Spindelstock und der Reitstock des zusätzlichen Werkstückhalters in identischer Weise relativ zueinander ausgerichtet oder ausrichtbar sind. Dies vereinfacht die Einrichtung der Finishwerkzeuge.

Für eine besonders hohe Arbeitsgenauigkeit ist es bevorzugt, dass der Spindelstock und der Reitstock des zusätzlichen Werkstückhalters abweichend von einer zueinander perfekt konzentrischen und parallelen Ausrichtung ihrer Drehachsen denselben Versatz und dieselbe Neigung relativ zueinander aufweisen wie die Drehachsen des Spindelstocks und des Reitstocks des Werkstückhalters des Arbeitsbereichs. Dies bedeutet, dass die Positions- und Lagefehler des Spindelstocks und des Reitstocks des Werkstückhalters des Arbeitsbereichs in exakter Weise auf den Spindelstock und den Reitstock des zusätzlichen Werkstückhalters übertragen und von diesem nachgebildet werden.

Zur Ermittlung eines Positions- und Lagefehlers des Spindelstocks und des Reitstocks des Werkstückhalters des Arbeitsbereichs ist es möglich, eine glatte Welle ("Ausrichtwelle") zwischen dem Spindelstock und dem Reitstock des Werkstückhalters des Arbeitsbereichs einzuspannen und die Oberfläche der glatten Welle mit einer Messuhr abzufahren, vorzugsweise innerhalb von zwei unterschiedlichen Messebenen, welche insbesondere zueinander senkrecht sind.

Zur Anpassung der Position und/oder Lage des Spindelstocks und/oder des Reitstocks des zusätzlichen Werkstückhalters ist es bevorzugt, wenn der Spindelstock und/oder der Reitstock entlang von mindestens zwei, vorzugsweise drei zueinander senkrechten Stellachsen in ihrer Position einstellbar ist oder sind.

Dabei entspricht beispielsweise eine der Stellachsen einer jeweiligen Drehachse des Spindelstocks bzw. des Reitstocks. Andere Stellachsen ermöglichen eine Anpassung der Position des Spindelstocks bzw. des Reitstocks in Höhen- und/oder in Seitenrichtung.

Zur Vereinfachung des zusätzlichen Werkstückhalters ist es vorteilhaft, wenn der Spindelstock des zusätzlichen Werkstückhalters keinen Rotationsantrieb aufweist. Dieser ist nicht erforderlich, wenn in dem Zusatzbereich keine Werkstückbearbeitung sondern lediglich Wartungs- und/oder Einstellarbeiten durchgeführt werden.

Zur Vereinfachung der Handhabung der Finishwerkzeuge ist vorgesehen, dass diese an einem Finishwerkzeughalter gehalten sind, der entlang der Transportachse bewegbar angetrieben ist. Die Transportachse wird konstruktiv beispielsweise durch eine Schlittenführung ausgebildet, entlang welcher ein Schlitten verfahrbar ist. Dieser Schlitten ist Teil des Finishwerkzeughalters oder bildet den Finishwerkzeughalter. Insbesondere ist die Transportachse gradlinig, wodurch der Transport der Finishwerkzeuge vereinfacht wird.

Die vorstehend beschriebenen Maßnahmen sind besonders vorteilhaft, wenn dem Arbeitsbereich der Finishvorrichtung ein Werkstücktransportsystem zugeordnet ist. Ein solches Werkstücktransportsystem vereinfacht die Zuführung unbearbeiteter Werkstücke und den Abtransport finishend bearbeiteter Werkstücke.

Vorteilhaft ist es ferner, wenn dem Arbeitsbereich der Finishvorrichtung eine Spritzschutzeinrichtung zugeordnet ist, sodass die Bereiche außerhalb des Arbeitsbereichs, vorzugsweise einschließlich des Zusatzbereichs, vor Kühlflüssigkeit und/oder Schmierflüssigkeit geschützt sind.

Besondere Vorteile ergeben sich, wenn die Finishwerkzeuge Finishbänder umfassen oder als solche ausgebildet sind. Finishbänder erfordern eine vergleichsweise aufwändige Handhabung zur Führung eines Finishbandabschnitts an das Werkstück heran, im Bereich des Kontakts mit dem Werkstück und von dem zu bearbeitenden Werkstück weg. Die hierfür erforderlichen Finishbandführungen sind bei der erfindungsgemäßen Finishvorrichtung für Wartungsvorgänge besonders gut zugänglich.

Die erfindungsgemäße Finishvorrichtung eignet sich insbesondere zur Bearbeitung von Kurbelwellen mit Hauptlagern und Zusatzlagern in Form von Pleuellagern und zur Bearbeitung von Nockenwellen mit Hauptlagern und Zusatzlagern in Form von Nockenumfangsflächen.

Die Erfindung betrifft auch ein Verfahren zur Einrichtung einer vorstehend beschriebenen Finishvorrichtung, welches dadurch gekennzeichnet ist, dass ein dem Werkstückhalter des Arbeitsbereichs zugeordneter Positions- und Lagefehler erfasst wird und dass der zusätzliche Werkstückhalter oder Teile davon so positioniert und/oder ausgerichtet wird oder werden, dass ein dem zusätzlichen Werkstückhalter zugeordneter Positions- und Lagefehler identisch ist zu dem Positions- und Lagefehler des Werkstückhalters des Arbeitsbereichs.

Ein Positions- und Lagefehler eines Werkstückhalters entspricht einer Abweichung zu einer zueinander perfekt konzentrischen und parallelen Ausrichtung der zentralen Achsen eines Spindelstocks und eines Reitstocks eines Werkstückhalters relativ zueinander. Bei den zentralen Achsen des Werkstückhalters des Arbeitsbereichs handelt es sich um Drehachsen. Bei den zentralen Achsen des zusätzlichen Werkstückhalters des Zusatzbereichs handelt es sich um Drehachsen oder in Drehrichtung fixierte Halteachsen zum Halten eines Einrichtwerkstücks oder eines Werkstücks.

Die Erfindung betrifft auch ein Verfahren zum Betrieb einer vorstehend beschriebenen Finishvorrichtung, welches dadurch gekennzeichnet ist, dass die Finishwerkzeuge in den Zusatzbereich verbracht, dort insbesondere mittels eines Einrichtwerkstücks (alternativ hierzu mittels eines Werkstücks) ausgerichtet werden, anschließend in ihrem ausgerichteten Zustand in den Arbeitsbereich verbracht werden und dort zur finishenden Bearbeitung eines Werkstücks verwendet werden.

Weitere Merkmale und Vorteile der Erfindung sind Gegenstand der nachfolgenden Beschreibung und der zeichnerischen Darstellung eines bevorzugten Ausführungsbeispiels.
Fig. 1 eine Vorderansicht einer vorbekannten Finishvorrichtung;
Fig. 2 eine Draufsicht der Finishvorrichtung gemäß Fig. 1;
Fig. 3 eine perspektivische Ansicht einer Ausführungsform einer erfindungsgemäßen Finishvorrichtung, mit in einem Arbeitsbereich angeordneten Finishwerkzeugen;
Fig. 4 eine der Fig. 3 entsprechende Ansicht, wobei die Finishwerkzeuge in einem Zusatzbereich angeordnet sind;
Fig. 5 eine Vorderansicht der Finishvorrichtung gemäß Fig. 3 und 4;
Fig. 6 eine perspektivische Ansicht der Finishvorrichtung gemäß Fig. 3 und 4, ohne Schutzhaube;
Fig. 7 eine Vorderansicht von Teilen der Finishvorrichtung gemäß Fig. 3 und 4, mit einem Arbeitsbereich-Werkstückhalter und mit einem Zusatzbereich-Werkstückhalter;
Fig. 8 eine Vorderansicht des Zusatzbereich-Werkstückhalters gemäß Fig. 7 in vergrößerter Darstellung;
Fig. 9 eine Seitenansicht des Zusatzbereich-Werkstückhalters gemäß Fig. 7 und 8;
Fig. 10 eine Draufsicht einer Ausführungsform einer Einrichtwelle zur Anordnung im Zusatzbereich und zur Positionierung von zwei beispielhaft dargestellten Finishwerkzeugen entlang einer zentralen Achse der Einrichtwelle; und
Fig. 11 eine Draufsicht einer Ausführungsform eines mit der Einrichtwelle korrespondierenden Werkstücks zur Anordnung im Arbeitsbereich, mit entlang einer zentralen Achse des Werkstücks relativ zueinander positionierten Finishwerkzeugen gemäß Fig. 10.

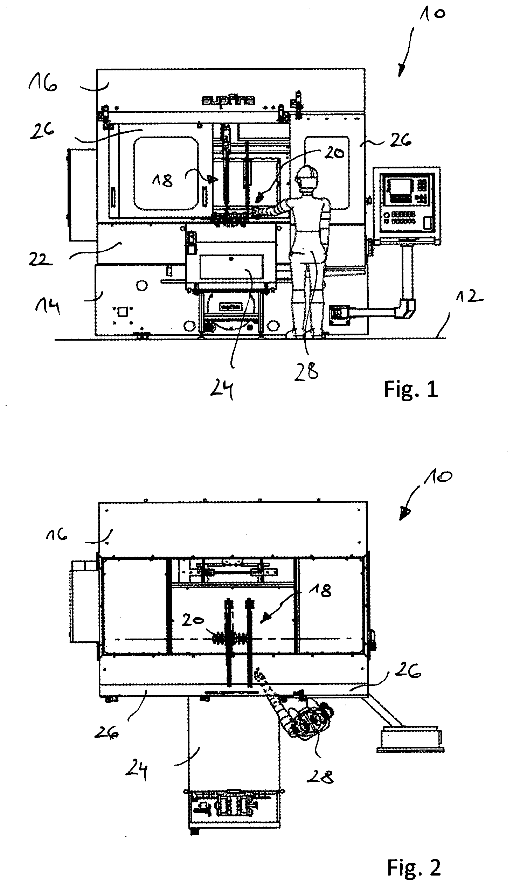

Eine vorbekannte Finishvorrichtung ist in den Figuren 1 und 2 dargestellt und dort insgesamt mit dem Bezugszeichen 10 bezeichnet. Die Finishvorrichtung 10 ist in Form einer Werkzeugmaschine ausgebildet, welche auf einer Aufstellfläche 12 aufgestellt ist. Die Finishvorrichtung 10 umfasst ein Fundament 14 und eine Schutzhaube 16 zur Begrenzung eines Innenraums. In dem Innenraum der Werkzeugmaschine sind eine Mehrzahl von Finishwerkzeugen 18 sowie ein Werkstück 20 angeordnet.

Die Finishvorrichtung 10 umfasst einen Spritzschutz 22 in Form einer Gehäusewand sowie ein Werkstücktransportsystem 24, mittels welchem Werkstücke 20 von einer Vorderseite der Finishvorrichtung 10 her in den Innenraum eingebracht und aus dem Innenraum wieder abtransportiert werden können.

Für einen Zugang zu dem Innenraum der Finishvorrichtung 10 sind Verschiebeelemente 26 vorgesehen, welche Teil der Schutzhaube 16 sind und sich so verschieben lassen, dass an der Vorderseite der Finishvorrichtung 10 eine Zugangsöffnung entsteht.

Im Zuge der Vorbereitung der Fertigung eines Werkstückloses ist es erforderlich, die Finishwerkzeuge 18 hinsichtlich ihrer Position und Ausrichtung an die Geometrie eines Werkstücks 20 anzupassen. Die hierfür erforderlichen Einrichtvorgänge sind unter anderem durch den Spritzschutz 22 und das Werkstücktransportsystem 24 erschwert. Für eine Bedienperson 28 ist es insbesondere schwierig, Finishwerkzeuge einzustellen, welche von benachbarten Finishwerkzeugen verdeckt sind. In diesem Zusammenhang wird angemerkt, dass die in den Figuren 1 und 2 beispielhaft dargestellten zwei Finishwerkzeuge 18 üblicherweise Teil einer größeren Gruppe von Finishwerkzeugen sind. Beispielsweise werden für die Bearbeitung einer Kurbelwelle für einen vierzylindrigen Reihenmotor insgesamt neun Finishwerkzeuge verwendet, welche eng benachbart zueinander angeordnet sind. Dabei dienen fünf Finishwerkzeuge zur Bearbeitung von Hauptlagern der Kurbelwelle und vier Finishwerkzeuge zur Bearbeitung von Pleuellagern der Kurbelwelle.

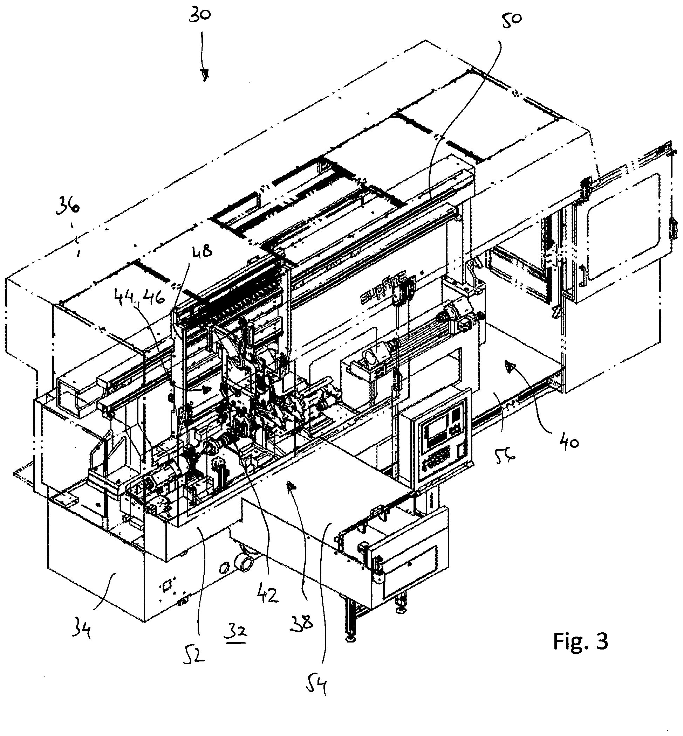

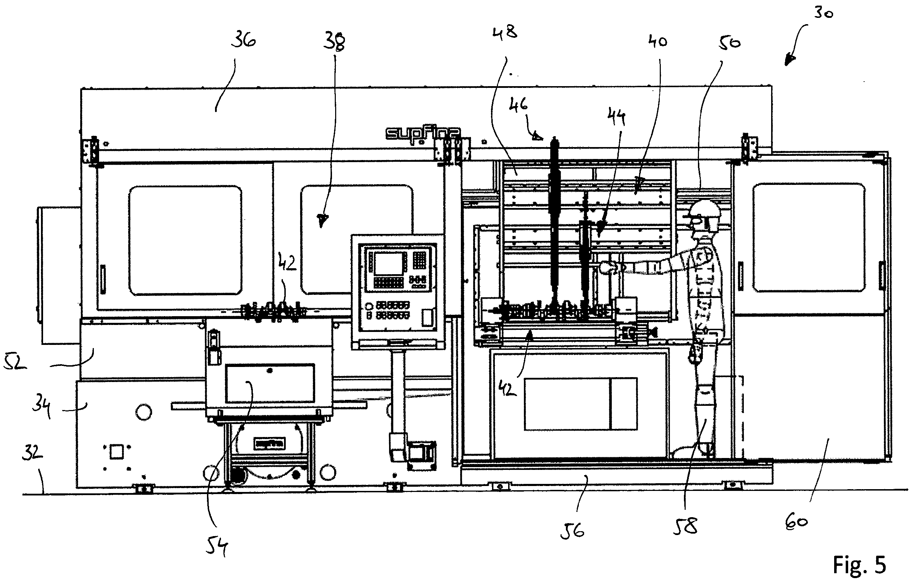

Eine erfindungsgemäße Finishvorrichtung in Form einer Werkzeugmaschine ist in Figuren 3 bis 5 dargestellt und dort insgesamt mit dem Bezugszeichen 30 bezeichnet. Die Finishvorrichtung 30 wird auf einer Aufstellfläche 32 aufgestellt und umfasst ein Fundament 34 und eine Schutzhaube 36 zur Begrenzung eines Innenraums der Werkzeugmaschine.

Der Innenraum der Finishvorrichtung 30 umfasst einen Arbeitsbereich 38 und einen außerhalb des Arbeitsbereichs 38 angeordneten Zusatzbereich 40. Der Arbeitsbereich 38 dient dazu, ein Werkstück 42, insbesondere eine Kurbel- oder Nockenwelle, finishend zu bearbeiten. Hierfür sind Finishwerkzeuge 44, 46 vorgesehen, welche benachbart zueinander angeordnet sind und zueinander benachbarte Werkstückflächen des Werkstücks 42 bearbeiten. Zur Verbesserung der Übersichtlichkeit sind in der Zeichnung lediglich zwei Finishwerkzeuge dargestellt, nämlich ein erstes Finishwerkzeug 44 zur Bearbeitung eines Hauptlagers des Werkstücks 42 und ein zweites Finishwerkzeug 46 zur Bearbeitung eines Pleuellagers des Werkstücks 42.

Die Finishwerkzeuge 44, 46 sind jeweils verschiebbar an einem Schlitten 48 gehalten, welcher seinerseits entlang einer Schlittenführung 50 verschiebbar ist. Die Schlittenführung 50 ist gradlinig. Die Gesamtlänge der Schlittenführung 50 entspricht der Summe der jeweiligen Einzellängen des Arbeitsbereichs 38 und des Zusatzbereichs 40.

Die Finishvorrichtung 30 weist dem Arbeitsbereich 38 zugeordnet einen Spritzschutz 52 in Form einer Wand auf, welche Teil der Schutzhaube 36 ist. Die Finishvorrichtung 30 weist ferner ein Werkstücktransportsystem 54 auf, welches ausgehend von dem Arbeitsbereich 38 nach vorne hin relativ zu der Schutzhaube 36 herausragt und somit, wie auch der Spritzschutz 52, einen Zugang zu dem Arbeitsbereich 38 der Finishvorrichtung 30 erschwert.

Der Zusatzbereich 40 umfasst ein bodenseitig angeordnetes Podest 56 mit einer Trittfläche für eine Bedienperson 58.

Dem Zusatzbereich 40 ist ferner mindestens eine Tür 60 zugeordnet, welche vorzugsweise so groß ist, dass die Bedienperson 58 den Zusatzbereich 40 betreten kann. Beispielsweise weist eine von der Tür 60 freigebbare Öffnung eine Mindesthöhe von 1,60 m, vorzugsweise von 2 m auf auf. Eine Mindestbreite der von der Tür 60 freigebbaren Öffnung beträgt beispielsweise 0,8 m, vorzugsweise 1,2 m.

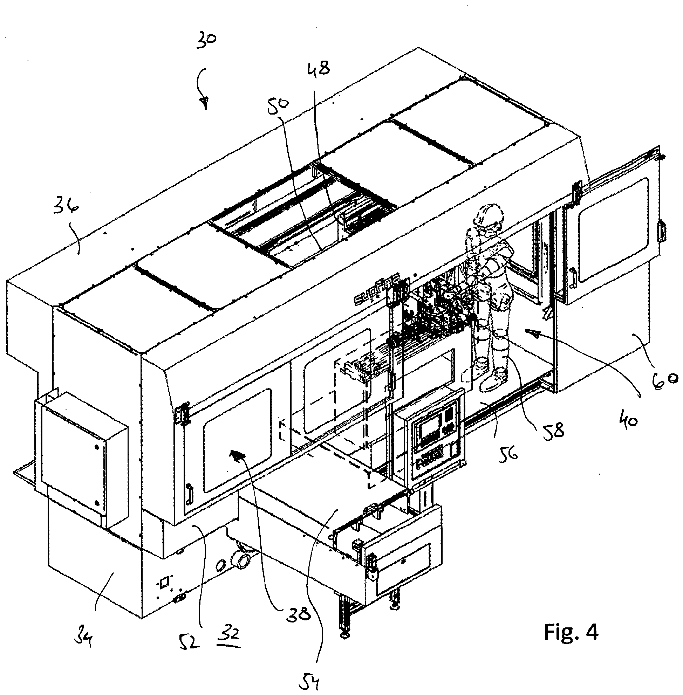

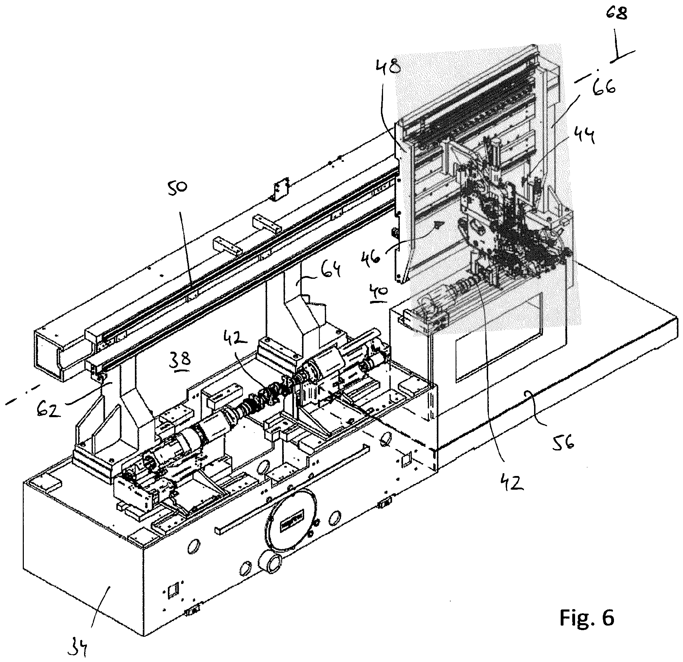

Zur Einrichtung und/oder Wartung der Finishwerkzeuge 44, 46 werden die Finishwerkzeuge aus dem Arbeitsbereich 38 (vgl. Figur 3) in den Zusatzbereich 40 (vgl. Figuren 4, 5 und 6) verbracht. Hierfür ist ein aus Übersichtgründen nicht dargestellter motorischer Antrieb vorgesehen, welcher beispielsweise über eine Gewindespindel eine dem Schlitten 48 zugeordnete Spindelmutter antreibt und somit den Schlitten 48 längs der Schlittenführung 50 verschiebt. Die Finishwerkzeuge 44, 46 können auch mit Hilfe von pneumatischen oder hydraulischen Zylindern zwischen dem Arbeitsbereich und dem Zusatzbereich 40 transportiert werden.

Die Schlittenführung 50 ist im oberen Bereich des Innenraums der Finishvorrichtung 30 angeordnet und beispielsweise auf drei Abstützsäulen 62, 64 und 66 abgestützt. Vorzugsweise ist jeweils eine Säule (62 bzw. 66) jeweils einem der Bereiche 38 und 40 zugeordnet, wobei eine zentrale Säule 64 im Übergangsbereich zwischen Arbeitsbereich 38 und Zusatzbereich 40 angeordnet ist.

Die Schlittenführung 50 definiert eine Transportachse 68, entlang welcher der Schlitten 48 zwischen dem Arbeitsbereich 38 und dem Zusatzbereich 40 verschiebbar ist.

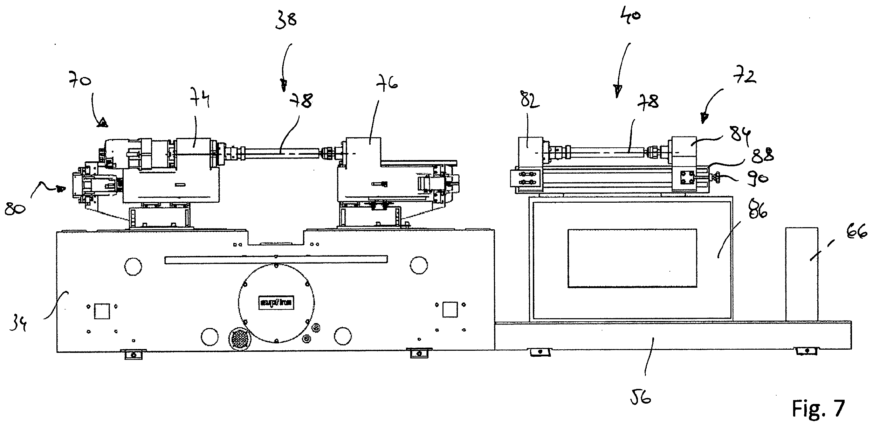

Nachfolgend werden unter Bezugnahme auf die Figuren 7 bis 9 Werkstückhalter zum Halten eines Werkstücks 42 beschrieben. Ein dem Arbeitsbereich zugeordneter Werkstückhalter 70 umfasst einen als Rotationsantrieb dienenden Spindelstock 74 sowie einen Reitstock 76. Während der finishenden Bearbeitung eines Werkstücks 42 rotiert dieses um eine Werkstückachse 78. Dieser Rotationsbewegung wird eine oszillierende Hin- und Herbewegung überlagert. Hierfür ist ein Oszillationsantrieb 80 vorgesehen, welcher einen Verbund aus Spindelstoff 74, Werkstück 42 und Reitstock 76 in an sich bekannter Art und Weise in zu der Werkstückachse 78 paralleler Richtung hin- und herbewegt.

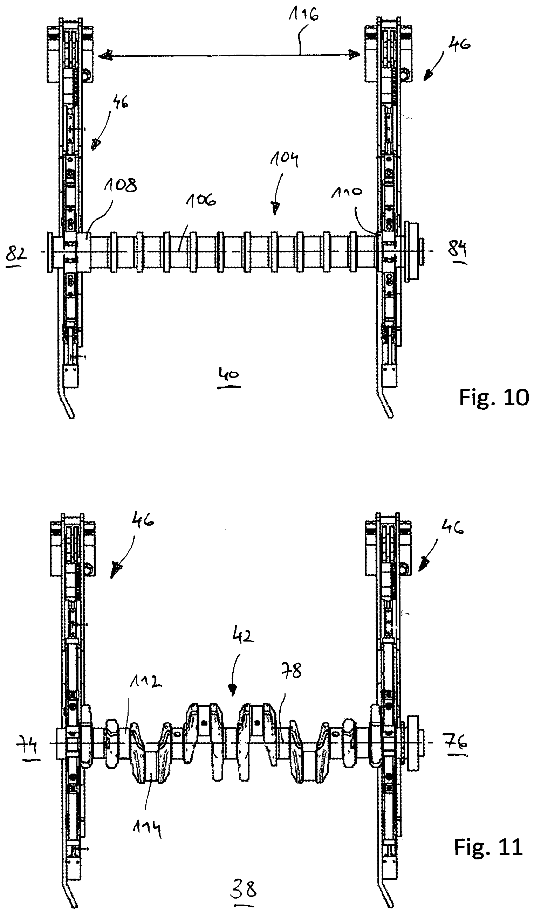

Der Werkstückhalter 72 des Zusatzbereichs 40 weist ebenfalls einen Spindelstock 82 und einen Reitstock 84 auf, sodass eine zu dem Werkstück 42 korrespondierende Einrichtwelle 104 (vgl. Fig. 10) in dem zusätzlichen Werkstückhalter 72 anordenbar ist. Vorzugsweise ist der Spindelstock 82 des zusätzlichen Werkstückhalters 72 so ausgebildet, dass eine zwischen dem Spindelstock 82 und dem Reitstock 84 aufgenommene Einrichtwelle 104 zwar drehbar gelagert ist, jedoch nicht aktiv in Rotationsrichtung antreibbar ist. Bei einer besonders bevorzugten Ausführungsform ist die Einrichtwelle 104 nur zwischen den Spitzen des Spindelstocks 82 und des Reitstocks 84 aufgenommen und dabei auch in Drehrichtung fixiert.

Der zusätzliche Werkstückhalter 72 ist auf einem Gestell 86 montiert, sodass bei Anordnung eines Werkstücks 42 in dem zusätzlichen Werkstückhalter 72 eine Werkstückachse 78 des Werkstücks 42 zumindest im Wesentlichen mit einer Werkstückachse 78 eines Werkstücks 42 fluchtet, welches an oder in dem Werkstückhalter 70 des Arbeitsbereiches 38 gehalten ist. Mit anderen Worten: Der Werkstückhalter 72 des Zusatzbereichs 40 bildet die Werkstückhalteflächen des Werkstückhalters 70 des Arbeitsbereichs 38 nach.

Der Spindelstock 82 und/oder der Reitstock 84 des zusätzlichen Werkstückhalters 72 sind parallel zu der Transportachse 68 der Finishvorrichtung 30 verschiebbar und an einer Halteschiene 88 gehalten. Zur Verstellung des Reitstocks 84 entlang einer parallel zu der Transportachse 68 ausgerichteten Verstellachse 92 ist ein handbetätigbares Einstellrad 90 vorgesehen. Der Spindelstock 82 ist zwecks Einstellung längs der Stellachse 92 mittels einer Langlochverschraubung 94 an der Halteschiene 88 befestigt.

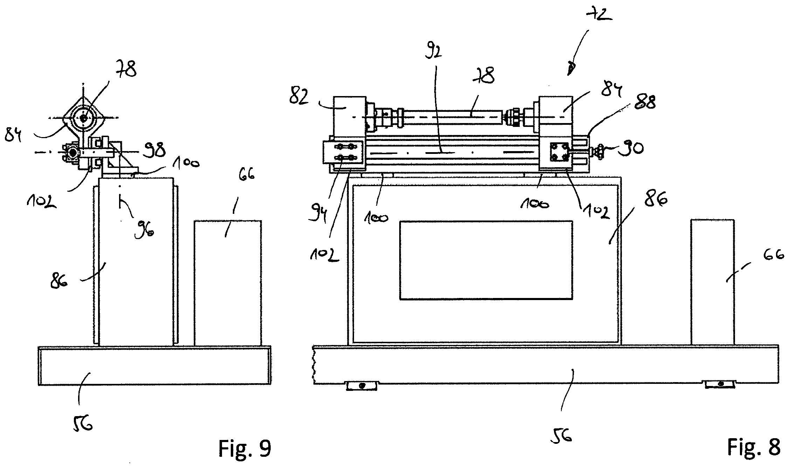

Zur Positionierung des Spindelstocks 82 und/oder des Reitstocks 84 entlang einer vertikalen Stellachse 96 und/oder entlang einer horizontalen Stellachse 98 können entsprechende Verstelleinrichtungen vorgesehen sein. Im einfachsten Fall erfolgt eine Einstellung entlang einer vertikalen Stellachse 96 durch Verwendung einer auf Maß geschliffenen Abstandsplatte 100 bzw. in einer horizontalen Richtung durch Verwendung einer geschliffenen Abstandsplatte 102 (vgl. Figur 9).

Zur Festlegung der Position und Lage des Spindelstocks 82 und/oder des Reitstocks 84 des zusätzlichen Werkstückhalters 72 wird eine (in der Zeichnung nicht dargestellte) glatte, zylindrische Ausrichtwelle in dem Arbeitsbereich 38 in den Werkstückhalter 70 zwischen Spitzen des Spindelstocks 74 und des Reitstocks 76 eingespannt. Anschließend wird die in Drehrichtung fixierte Ausrichtwelle entlang ihrer Länge mit einer Messuhr abgefahren, vorzugsweise innerhalb von zwei zueinander senkrechten Messebenen. Auf diese Weise wird ein Positions- und Lagefehler ermittelt. Bei diesem Positions- und Lagefehler handelt es sich um eine Abweichung zu einer zueinander perfekt konzentrischen und parallelen Ausrichtung der Drehachsen des Spindelstocks 74 und des Reitstocks 76 relativ zueinander.

Anschließend wird dieselbe Ausrichtwelle in dem Werkstückhalter 72 des Zusatzbereichs 40 zwischen Spitzen des Spindelstocks 82 und des Reitstocks 84 aufgenommen und auch dort wie vorstehend beschrieben mit einer Messuhr abgefahren. Der auf diese Weise ermittelte, dem Zusatzbereich 40 zugeordnete Positions- und Lagefehler wird mit dem dem Arbeitsbereich 38 zugeordneten Positions- und Lagefehler verglichen.

Anschließend werden die Positionen des Spindelstocks 82 und/oder des Reitstocks 84 des zusätzlichen Werkstückhalters 72 entlang der Verstellachsen 92, 96 und/oder 98 eingestellt, bis der dem Zusatzbereich 40 zugeordnete Positions- und Lagefehler mit dem dem Arbeitsbereich 38 zugeordneten Positions- und Lagefehler übereinstimmt.

Nachfolgend wird beispielhaft ein Einrichtvorgang beschrieben, welcher in dem Zusatzbereich 40 durchgeführt werden kann, zur Vorbereitung einer finishenden Bearbeitung eines Werkstücks 42 in dem Arbeitsbereich 38.

In dem Zusatzbereich 40 kann ein Einrichtwerkstück in Form einer Einrichtwelle 104 positioniert werden, welches entlang seiner Achse 106 eine Mehrzahl von Axialanschlägen 108, 110 aufweist (vgl. Figur 10). Diese Axialanschläge 108, 110 sind hinsichtlich ihrer Abstände abgestimmt auf entsprechende Abstände von zu bearbeitenden Oberflächenabschnitten eines Werkstücks 42, welches insbesondere in Form einer Kurbelwelle ausgebildet ist und Hauptlager 112 und Pleuellager 114 umfasst (vgl. Figur 11).

Bei dem in Figur 10 dargestellten Ausführungsbeispiel werden zwei Finishwerkzeuge 46, welche jeweils zur Bearbeitung eines Hauptlagers 112 des Werkstücks 42 ausgebildet sind, in ihrem Abstand 116 relativ zueinander positioniert. Hierbei wird jeweils ein Finishwerkzeug 46 in Anschlag mit einem der Anschläge 108, 110 gebracht. Anschließend werden die Finishwerkzeuge 46 in dem in axialer Richtung relativ zueinander ausgerichteten Zustand an dem Schlitten 48 fixiert. Wenn anschließend die Finishwerkzeuge 46 mittels des Schlittens 48 aus dem Zusatzbereich 40 in den Arbeitsbereich 38 verbracht werden, haben die Finishwerkzeuge 46 einen relativen Abstand zueinander, welcher bereits an die Geometrie des zu bearbeitenden Werkstücks 42 angebracht ist, sodass ein diesbezüglicher Ausrichtvorgang in dem Arbeitsbereich 38 nicht mehr vorgenommen werden muss.

Die Einrichtwelle 104 dient vorzugsweise auch dazu, den Finishwerkzeugen 44, 46 zugeordnete Andrückschalen, welche ein Finishband gegen ein zu bearbeitende Oberfläche des Werkstücks 42 drücken, relativ zu einem Andrückschalenträger (insbesondere einem Andrückarm) auszurichten. Hierfür ist es bevorzugt, wenn zur Befestigung einer Andrückschale an einem Andrückarm eine Einstelleinrichtung vorgesehen ist. Beispielsweise ist eine neigungseinstellbare Verschraubung zur Befestigung einer Andrückschale an einem Andrückarm vorgesehen, wobei diese neigungseinstellbare Verschraubung die Einstelleinrichtung bildet. Eine solche neigungseinstellbare Verschraubung umfasst vorzugsweise Kugelscheiben und Kegelpfannen, welche relativ zueinander in ihrer Neigung eingestellt werden können, sodass eine Achse einer Schraube, welche die Kugelscheibe und Kegelpfanne durchsetzt, ebenfalls in ihrer Neigung einstellbar ist, um eine Neigung der Andrückschale relativ zu dem Andrückarm zu definieren. Auf diese Weise können Fertigungs- und Montagefehler im Gesamtsystem, die sich an der Schnittstelle zu dem Werkstück 42 aufsummieren, kompensiert werden.

Es ist auch denkbar, anstelle einer Einrichtwelle 104 ein Werkstück 42 zur Durchführung der vorstehend beschriebenen Ausrichtvorgänge (Einstellung des Abstands der Finishwerkzeuge, Ausrichtung der Andrückschalen) zu verwenden.

## Patentansprüche

1. Finishvorrichtung (30) zur Finishbearbeitung eines Werkstücks (42), insbesondere einer Kurbelwelle oder einer Nockenwelle, mit einem Werkstückhalter (70) und mit einem Rotationsantrieb zur Rotation des Werkstücks (42) um dessen Werkstückachse (78), mit mindestens einem ersten Finishwerkzeug (44) zur Bearbeitung eines zu der Werkstückachse (78) konzentrischen Hauptlagers und mit mindestens einem zweiten Finishwerkzeug (46) zur Bearbeitung eines Zusatzlagers, wobei die Finishwerkzeuge (44, 46) entlang einer Transportachse (68) bewegbar sind, welche sich über einen durch den Werkstückhalter (70) definierten Arbeitsbereich (38), der zur finishenden Bearbeitung eines Werkstück (42) mittels der Finishwerkzeuge (44, 46) dient, hinaus erstreckt, wobei die Finishwerkzeuge (44, 46) an einem Finishwerkzeughalter gehalten sind, der entlang der Transportachse (68) bewegbar angetrieben ist, **dadurch gekennzeichnet, dass** der Finishwerkzeughalter mit den Finishwerkzeugen (44, 46) entlang der Transportachse (68) in einen außerhalb des Arbeitsbereichs (38) angeordneten Zusatzbereich (40) verbringbar ist, in welchem ein zusätzlicher Werkstückhalter (72) angeordnet ist.

2. Finishvorrichtung (30) nach Anspruch 1, **dadurch gekennzeichnet, dass** der zusätzliche Werkstückhalter (72) hinsichtlich seiner mit einem Werkstück (42) zusammenwirkenden Werkstückhalteflächen baugleich zu dem Werkstückhalter (70) des Arbeitsbereichs (38) ist.

3. Finishvorrichtung (30) nach Anspruch 1 oder 2, **dadurch gekennzeichnet, dass** der zusätzliche Werkstückhalter (72) einen Spindelstock (82) und einen Reitstock (84) umfasst.

4. Finishvorrichtung (30) nach Anspruch 3, **dadurch gekennzeichnet, dass** ein Spindelstock (74) und ein Reitstock (76) des Werkstückhalters (70) des Arbeitsbereichs (38) relativ zueinander ausgerichtet sind und dass der Spindelstock (82) und der Reitstock (84) des zusätzlichen Werkstückhalters (72) in identischer Weise relativ zueinander ausgerichtet oder ausrichtbar sind.

5. Finishvorrichtung (30) nach Anspruch 3 oder 4, **dadurch gekennzeichnet, dass** der Spindelstock (82) und der Reitstock (84) des zusätzlichen Werkstückhalters (72) abweichend von einer zueinander perfekt konzentrischen und parallelen Ausrichtung ihrer Drehachsen denselben Versatz und dieselbe Neigung relativ zueinander aufweisen wie die Drehachsen des Spindelstocks (74) und des Reitstocks (76) des Werkstückhalters (70) des Arbeitsbereichs (38).

6. Finishvorrichtung (30) nach einem der Ansprüche 3 bis 5, **dadurch gekennzeichnet, dass** der Spindelstock (82) und/oder der Reitstock (84) des zusätzlichen Werkstückhalters (72) entlang von zueinander senkrechten Stellachsen (92, 96, 98) in ihrer Position einstellbar ist oder sind.

7. Finishvorrichtung (30) nach einem der Ansprüche 3 bis 6, **dadurch gekennzeichnet, dass** der Spindelstock (82) des zusätzlichen Werkstückhalters (72) keinen Rotationsantrieb aufweist.

8. Finishvorrichtung (30) nach einem der voranstehenden Ansprüche, **dadurch gekennzeichnet, dass** dem Arbeitsbereich (38) ein Werkstücktransportsystem (54) zugeordnet ist.

9. Finishvorrichtung (30) nach einem der voranstehenden Ansprüche, **dadurch gekennzeichnet, dass** dem Arbeitsbereich (38) eine Spritzschutzeinrichtung (52) zugeordnet ist.

10. Finishvorrichtung (30) nach einem der voranstehenden Ansprüche, **dadurch gekennzeichnet, dass** die Finishwerkzeuge (44, 46) Finishbänder umfassen oder als solche ausgebildet sind.

11. Verfahren zur Einrichtung einer Finishvorrichtung (30) nach einem der Ansprüche 2 bis 10, **dadurch gekennzeichnet, dass** ein dem Werkstückhalter (70) des Arbeitsbereichs (38) zugeordneter Positions- und Lagefehler erfasst wird und dass der zusätzliche Werkstückhalter (72) oder Teile davon so positioniert und/oder ausgerichtet wird oder werden, dass ein dem zusätzlichen Werkstückhalter (72) zugeordneter Positions- und Lagefehler identisch ist zu dem Positions- und Lagefehler des Werkstückhalters (70) des Arbeitsbereichs (38).

12. Verfahren zum Betrieb einer Finishvorrichtung (30) nach einem der Ansprüche 1, 2, 4 bis 10, **dadurch gekennzeichnet, dass** die Finishwerkzeuge (44, 46) in den Zusatzbereich (40) verbracht, dort mittels eines Einrichtwerkstücks in Form einer Einrichtwelle (104) oder mittels eines Werkstücks (42) ausgerichtet werden, wobei das Einrichtwerkstück oder das Werkstück (42) in dem zusätzlichen Werkstückhalter (72) angeordnet ist, wobei der Werkstückhalter (72) einen Spindelstock (82) und einen Reitstock (84) aufweist, wobei die Finishwerkzeuge (44, 46) anschließend in ihrem ausgerichteten Zustand in den Arbeitsbereich (38) verbracht werden und dort zur finishenden Bearbeitung eines Werkstücks (42) verwendet werden.

## Claims

1. Finishing device (30) for finish machining a workpiece (42), in particular a crankshaft or a camshaft, comprising a workpiece holder (70) and a rotary drive for rotating the workpiece (42) about the workpiece axis (78) thereof, comprising at least one first finishing tool (44) for machining a main bearing concentric to the workpiece axis (78) and at least one second finishing tool (46) for machining an additional bearing, wherein the finishing tools (44, 46) can be moved along a transport axis (68) which extends beyond a working area (38) defined by the workpiece holder (70) and which serves to finish machine of a workpiece (42) by means of the finishing tools (44, 46), wherein the finishing tools (44, 46) are held on a finishing tool holder which is driven in a movable manner along the transport axis (68), **characterized in that** the finishing tool holder with the finishing tools (44, 46) can be moved along the transport axis (68) into an additional area (40) which is arranged outside the working area (38) and in which an additional workpiece holder (72) is arranged.

2. Finishing device (30) according to claim 1, **characterized in that** the additional workpiece holder (72) is structurally identical to the workpiece holder (70) of the working area (38) with respect to its workpiece holding surfaces interacting with a workpiece (42).

3. Finishing device (30) according to claim 1 or 2, **characterized in that** the additional workpiece holder (72) comprises a headstock (82) and a tailstock (84).

4. Finishing device (30) according to claim 3, **characterized in that** a headstock (74) and a tailstock (76) of the workpiece holder (70) of the working area (38) are aligned relative to one another and that the headstock (82) and the tailstock (84) of the additional workpiece holder (72) are or can be aligned in an identical manner relative to one another.

5. Finishing device (30) according to either claim 3 or 4, **characterized in that** the headstock (82) and the tailstock (84) of the additional workpiece holder (72) deviate from having an alignment of their axes of rotation that is perfectly concentric and parallel to one another and have the same offset and the same tilt relative to one another as the axes of rotation of the headstock (74) and of the tailstock (76) of the workpiece holder (70) of the working area (38).

6. Finishing device (30) according to any of claims 3 to 5, **characterized in that** the position of the headstock (82) and/or of the tailstock (84) of the additional workpiece holder (72) can be adjusted along adjusting axes (92, 96, 98) that are perpendicular to one another.

7. Finishing device (30) according to any of claims 3 to 6, **characterized in that** the headstock (82) of the additional workpiece holder (72) does not have any rotary drive.

8. Finishing device (30) according to any of the preceding claims, **characterized in that** a workpiece transport system (54) is assigned to the working area (38).

9. Finishing device (30) according to any of the preceding claims, **characterized in that** a spray protection device (52) is assigned to the working area (38).

10. Finishing device (30) according to any of the preceding claims, **characterized in that** the finishing tools (44, 46) comprise finishing tapes or are constructed as such.

11. Method for setting up a finishing device (30) according to any of claims 2 to 10, **characterized in that** a positional and locational error assigned to the workpiece holder (70) of the working area (38) is detected and that the additional workpiece holder (72) or parts thereof is or are positioned and/or aligned such that a positional and locational error assigned to the additional workpiece holder (72) is identical to the positional and locational error of the workpiece holder (70) of the working area (38).

12. Method for operating a finishing device (30) according to any of claims 1, 2, 4 to 10, **characterized in that** the finishing tools (44, 46) are moved into the additional area (40), are aligned there by means of a setup workpiece which is a setup shaft (104), or by means of a workpiece (42), wherein the setup workpiece or the workpiece (42) is arranged in the additional workpiece holder (72), wherein the workpiece holder (72) comprises a headstock (82) and a tailstock (84), wherein the finishing tools (44, 46) are subsequently moved in their aligned state into the working area (38) and are used there for finish machining a workpiece (42).

## Revendications

1. Dispositif de finition (30) pour l'usinage de finition d'une pièce (42), en particulier d'un vilebrequin ou d'un arbre à cames, avec un porte-pièce (70) et avec un entraînement en rotation pour la rotation de la pièce (42) autour de l'axe de pièce (78) de celle-ci, avec au moins un premier outil de finition (44) pour l'usinage d'un palier principal concentrique par rapport à l'axe de pièce (78) et avec au moins un deuxième outil de finition (46) pour l'usinage d'un palier supplémentaire, dans lequel les outils de finition (44, 46) sont mobiles le long d'un axe de transport (68), lequel s'étend au-delà d'une zone de travail (38) définie par le porte-pièce (70), qui sert à l'usinage de finition d'une pièce (42) au moyen des outils de finition (44, 46), dans lequel les outils de finition (44, 46) sont retenus sur un porte-outil de finition, qui est entraîné de manière mobile le long de l'axe de transport (68), **caractérisé en ce que** le porte-outil de finition avec les outils de finition (44, 46) peut être amené le long de l'axe de transport (68) dans une zone supplémentaire (40) disposée à l'extérieur de la zone de travail (38), dans laquelle un porte-pièce (72) supplémentaire est disposé.

2. Dispositif de finition (30) selon la revendication 1, **caractérisé en ce que** le porte-pièce (72) supplémentaire en ce qui concerne ses surfaces de support de pièce coopérant avec une pièce (42) est de même construction que le porte-pièce (70) de la zone de travail (38).

3. Dispositif de finition (30) selon la revendication 1 ou 2, **caractérisé en ce que** le porte-pièce (72) supplémentaire comprend une tête porte-broche (82) et une contre-poupée (84).

4. Dispositif de finition (30) selon la revendication 3, **caractérisé en ce qu'**une tête porte-broche (74) et une contre-poupée (76) du porte-pièce (70) de la zone de travail (38) sont orientées l'une par rapport à l'autre et que la tête porte-broche (82) et la contre-poupée (84) du porte-pièce supplémentaire (72) sont orientées ou peuvent être orientées l'une par rapport à l'autre de manière identique.

5. Dispositif de finition (30) selon la revendication 3 ou 4, **caractérisé en ce que** la tête porte-broche (82) et la contre-poupée (84) du porte-pièce (72) supplémentaire présentent à la différence d'une orientation parfaitement concentrique et parallèle l'une par rapport à l'autre de leurs axes de rotation le même décalage et la même inclinaison l'une par rapport à l'autre que les axes de rotation de la tête porte-broche (74) et de la contre-poupée (76) du porte-pièce (70) de la zone de travail (38).

6. Dispositif de finition (30) selon l'une quelconque des revendications 3 à 5, **caractérisé en ce que** la tête porte-broche (82) et/ou la contre-poupée (84) du porte-pièce (72) supplémentaire est ou sont réglables dans leur position le long d'axes de réglage (92, 96, 98) perpendiculaires les uns aux autres.

7. Dispositif de finition (30) selon l'une quelconque des revendications 3 à 6, **caractérisé en ce que** la tête porte-broche (82) du porte-pièce (72) supplémentaire ne présente pas d'entraînement en rotation.

8. Dispositif de finition (30) selon l'une quelconque des revendications précédentes, **caractérisé en ce qu'**un système de transport de pièce (54) est associé à la zone de travail (38).

9. Dispositif de finition (30) selon l'une quelconque des revendications précédentes, **caractérisé en ce qu'**un dispositif antiprojection (52) est associé à la zone de travail (38).

10. Dispositif de finition (30) selon l'une quelconque des revendications précédentes, **caractérisé en ce que** les outils de finition (44, 46) comprennent des bandes de finition ou sont réalisés en tant que telles.

11. Procédé pour l'installation d'un dispositif de finition (30) selon l'une quelconque des revendications 2 à 10, **caractérisé en ce qu'**une erreur de position et de situation associée au porte-pièce (70) de la zone de travail (38) est détectée et que le porte-pièce (72) supplémentaire ou des parties de celui-ci est ou sont positionnés et/ou orientés de sorte qu'une erreur de position et de situation associée au porte-pièce (72) supplémentaire est identique à l'erreur de position et de situation du porte-pièce (70) de la zone de travail (38).

12. Procédé pour le fonctionnement d'un dispositif de finition (30) selon l'une quelconque des revendications 1, 2, 4 à 10, **caractérisé en ce que** les outils de finition (44, 46) sont amenés dans la zone supplémentaire (40), à l'endroit où ils sont orientés au moyen d'une pièce d'installation sous forme d'un arbre d'installation (104) ou au moyen d'une pièce (42), dans lequel la pièce d'installation ou la pièce (42) est disposée dans le porte-pièce (72) supplémentaire, dans lequel le porte-pièce (72) présente une tête porte-broche (82) et une contre-poupée (84), dans lequel les outils de finition (44, 46) sont ensuite amenés dans leur état orienté dans la zone de travail (38) et utilisés à cet endroit pour l'usinage de finition d'une pièce (42).
